# EUROPEAN PATENT APPLICATION

(11) **EP 4 366 013 A1**
(43) Date of publication of application: **08.05.2024**
(21) Application number: 23207569.7
(22) Date of filing: 02.11.2023
(51) Int. Cl.: H01M 10/04, H01M 50/105, B29C 53/00

(54) **APPARATUS FOR MANUFACTURING POUCH TYPE RECHARGEABLE-BATTERY**

(30) Priority: 03.11.2022 KR 20220145327
(71) Applicant: SK On Co., Ltd., Seoul 03161 (KR)
(72) Inventor: CHOI, Seung Won, 34124 Daejeon (KR); KIM, Dong Ju, 34124 Daejeon (KR); PARK, Sun Min, 34124 Daejeon (KR); KIM, Sang Mo, 34124 Daejeon (KR); BYUN, Jae Gyu, 34124 Daejeon (KR); OH, Won Je, 34124 Daejeon (KR); JEONG, Taek Eon, 34124 Daejeon (KR); HWANG, Ju Won, 34124 Daejeon (KR)
(74) Representative: Stolmár & Partner Patentanwälte PartG mbB

(57) **Abstract**

An apparatus for manufacturing a pouch-type rechargeable battery (10) includes a preforming portion (100) forming a folding groove (22) in a portion of a protrusion (20) of the pouch-type rechargeable battery, a folding portion (200) disposed on a rear end of the preforming portion and folding the protrusion along the folding groove, a rolling portion (300) disposed on a rear end of the folding portion and pressing the folded protrusion, and a pressing portion (400) disposed on a rear end of the rolling portion and fixing the folded protrusion.

## Description

### TECHNICAL FIELD

The present disclosure relates to an apparatus for manufacturing a pouch-type rechargeable-battery.

### BACKGROUND

Pouch-type secondary batteries may be divided into unidirectional pouch-type secondary batteries and bidirectional pouch-type secondary batteries depending on the direction of the electrode leads thereof, and may be divided into three-side sealing pouch-type secondary batteries and four-side sealing pouch-type secondary batteries, depending on the number of sealing surfaces.

On the other hand, in the case of a three-side sealing pouch type rechargeable battery, both ends of the non-sealed side protrude, and this is generally known by various names such as a shark-fin, a bat ear, or the like.

On the other hand, a plurality of pouch-type secondary batteries may be accommodated in a case and the like and manufactured as rechargeable battery modules and rechargeable battery packs.

However, there is a problem in which the volume density is lowered when manufacturing a rechargeable battery module or rechargeable battery pack due to the above-described protrusions, and furthermore, there is a problem in which cooling efficiency may be reduced.

### SUMMARY

An aspect of the present disclosure is to provide an apparatus for manufacturing a pouch-type rechargeable battery, in which protrusions may be removed or heights of protrusions may be reduced.

In some embodiments of the present disclosure, an apparatus for manufacturing a pouch-type rechargeable battery includes a preforming portion forming a folding groove in a portion of a protrusion of the pouch-type rechargeable battery, a folding portion disposed on a rear end of the preforming portion and folding the protrusion along the folding groove, a rolling portion disposed on a rear end of the folding portion and pressing the folded protrusion, and a pressing portion disposed on a rear end of the rolling portion and fixing the folded protrusion.

The preforming portion may include a seating table on which the pouch-type rechargeable battery is seated, a first mold on which a portion of the protrusion is seated and which is provided with a groove, and a second mold coupled to the first mold and provided with a protrusion inserted into the groove.

At least one of the second mold and the first mold may be lifted and lowered for coupling.

The folding portion may include a fixture fixing the pouch-type rechargeable battery, and a folding mold disposed adjacent to the fixture and raised and lowered.

The folding mold may be provided with an inclined surface contacting the protrusion.

The folding mold may be provided with a first surface disposed on a bottom end of the inclined surface and disposed perpendicularly to a bottom surface of the folding mold.

The rolling portion may include a roller pressing the folded protrusion, and a moving frame on which the roller is rotatably installed and which moves the roller in a longitudinal direction of the pouch-type rechargeable battery.

The roller may be disposed to be inclined with respect to a thickness direction of the pouch-type rechargeable battery.

The pressing portion may include a fixing bar fixing a terrace portion of the pouch-type rechargeable battery, and a pressing member spaced apart from the fixing bar and applying heat and pressure to the folded protrusion.

The pressing member may be in contact with the folded protrusion and may be moved to be spaced apart from the protrusion.

The roller may have an inclination angle of 15° to 45°.

In some embodiment of the present disclosures, protrusions formed in the pouch-type rechargeable battery is removed or the height of the protrusions is reduced.

### BRIEF DESCRIPTION OF DRAWINGS

Certain aspects, features, and advantages of the present disclosure are illustrated by the following detailed description with reference to the accompanying drawings.
FIGS. 1 and 2 are explanatory diagrams illustrating a preforming portion of an apparatus for manufacturing a pouch-type rechargeable battery.
FIGS. 3 and 4 are explanatory diagrams illustrating a folding portion of an apparatus for manufacturing a pouch-type rechargeable battery.
FIGS. 5 and 6 are explanatory diagrams illustrating a rolling portion of an apparatus for manufacturing a pouch-type rechargeable battery.
FIG. 7 is an explanatory diagram illustrating a pressing portion of an apparatus for manufacturing a pouch-type rechargeable battery.

### DETAILED DESCRIPTION

Hereinafter, example embodiments of the present disclosure will be described with reference to the attached drawings. The shapes and sizes of elements in drawings may be exaggerated for clearer explanation.

In addition, in this specification, singular expressions include plural expressions, unless the context clearly indicates otherwise. Throughout the specification, the same reference numerals refer to the same or corresponding components.

In addition, in this specification, expressions such as a top side, top portion, bottom side, bottom portion, side, side surface, front, rear, and the like are expressed based on the direction illustrated in the drawing, and it is noted in advance that if the direction of the object changes, it may be expressed differently.

Hereinafter, respective components included in an apparatus for manufacturing a pouch-type rechargeable battery will be sequentially described with reference to the drawings.

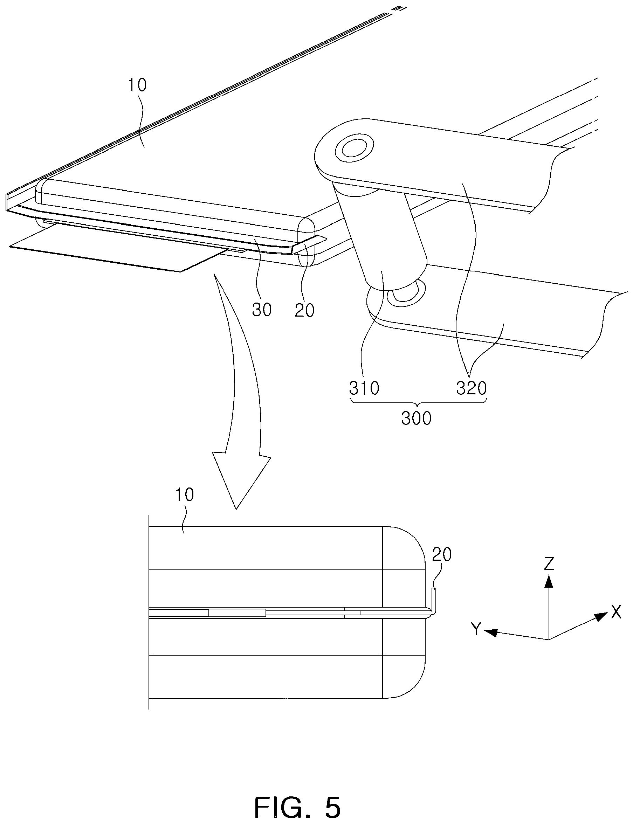

On the other hand, in the case of a three-side sealing pouch-type rechargeable battery (see 10 in FIG. 5), protrusions are formed on both ends of a non-sealed side. And the protrusions are generally called by various names such as shark-fins, bat ears, or the like. An apparatus for manufacturing a pouch-type rechargeable battery relates to an apparatus for removing protrusions after the three-side sealing of the pouch film is completed.

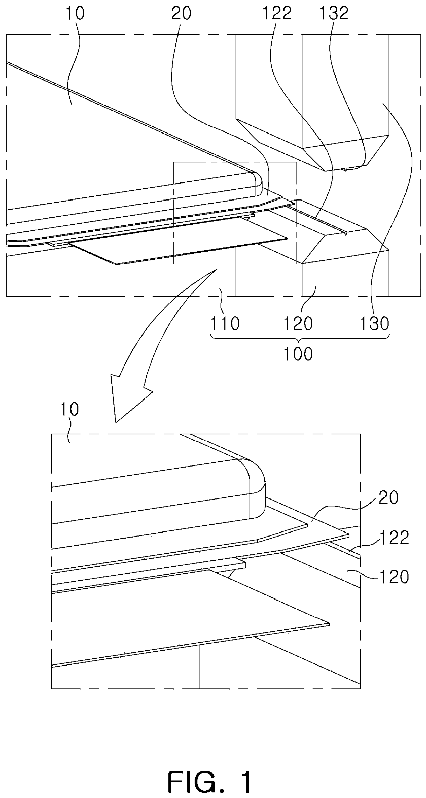

First, as illustrated in FIG. 1, an apparatus for manufacturing a pouch-type rechargeable battery includes a preforming portion 100. The preforming portion 100 includes a seating table 110 on which a pouch-type rechargeable battery 10 is seated, a first mold 120 disposed adjacent to the seating table 110 and on which the end of the protrusion 20 of the pouch-type rechargeable battery 10 is seated, and a second mold 130 combined with first mold 120.

On the other hand, the first mold 120 may be provided with a groove 122 for forming a folding groove in the protrusion 20, and the second mold 130 may be provided with a protrusion 132 inserted into the groove 122 of the first mold 120.

Then, the pouch-type rechargeable battery 10 seated on the seating table 110 is aligned such that a portion of the protrusion 20 is seated on the first mold 120. In this case, the alignment of the pouch-type rechargeable battery 10 may be performed by adjusting the position of the seating table 110, and the position of the pouch-type rechargeable battery 10 may also be aligned using a separate alignment unit.

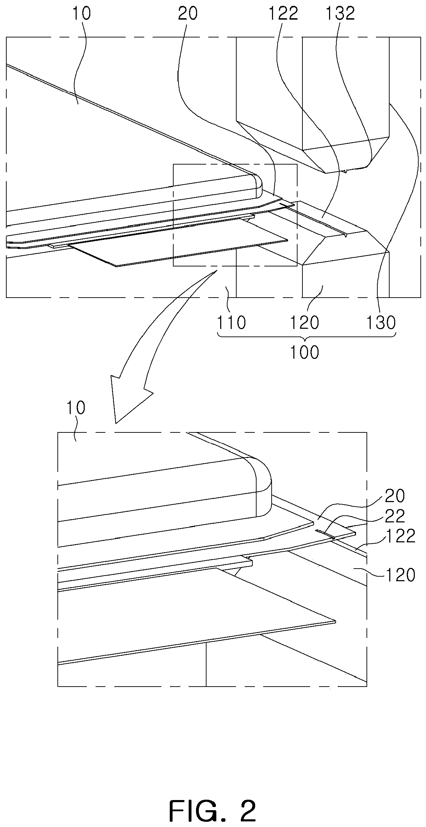

In addition, as illustrated in FIG. 2, the second mold 130 descends and is coupled to the first mold 120 and then rises. On the other hand, when the second mold 130 is lowered and coupled to the first mold 120, the protrusion 132 of the second mold 130 is inserted into the groove 122 of the first mold 120 together with the protrusion 20. Accordingly, a folding groove 22 is formed in the protrusion 20 of the pouch-type rechargeable battery 10.

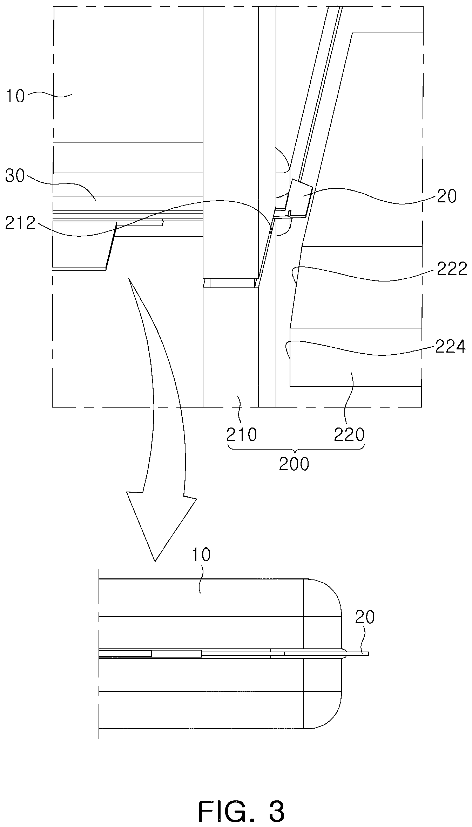

Next, as illustrated in FIG. 3, the apparatus for manufacturing a pouch-type rechargeable battery may further include a folding portion 200. The folding portion 200 includes a fixture 210 that fixes the pouch-type rechargeable battery 10, and a folding mold 220 that is disposed adjacent to the fixture 210 and is raised and lowered. The fixture 210 serves to fix the pouch-type rechargeable battery 10 and maintain a certain position thereof when the protrusion 20 is folded by the folding mold 220. As an example, the fixture 210 may fix the sealing portion adjacent to the protrusion 20. On the other hand, the folding mold 220 has an inclined surface 222, and when the folding mold 220 rises, the protrusion 20 of the pouch-type rechargeable battery 10 contacts the inclined surface 222 and is folded. The inclined surface 222 reduces friction applied to the protrusion 20 such that the folding operation of the protrusion 20 may be performed more smoothly. In addition, since the folding groove 22 is formed in the protrusion 20, the part where the protrusion 20 is folded may be constant.

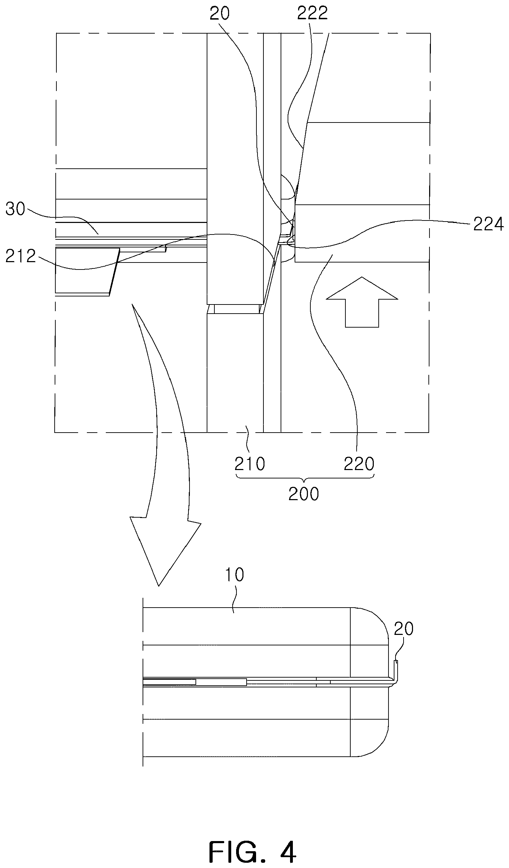

Thereafter, as illustrated in FIG. 4, the protrusion 20 of the pouch-type rechargeable battery 10 is finally folded by a first surface 224 provided on a bottom end of the inclined surface 222. On the other hand, the first surface 224 may be a surface perpendicular to the bottom surface of the folding mold 220.

On the other hand, as illustrated in FIG. 5, the apparatus for manufacturing a pouch-type rechargeable battery may further include a rolling portion 300. The rolling portion 300 may include a roller 310 that presses the folded protrusion 20, and a moving frame 320 in which the roller 310 is rotatably installed and which moves the roller 310 in the longitudinal direction of the pouch-type rechargeable battery 10, for example, in the X-axis direction of FIG. 5.

In addition, the roller 310 may be disposed to be inclined with respect to the thickness direction of the pouch-type rechargeable battery 10, for example, the Z-axis direction in FIG. 5. As an example, the roller 310 may be disposed to have an inclination angle of approximately 15° to 45° with respect to the Z axis.

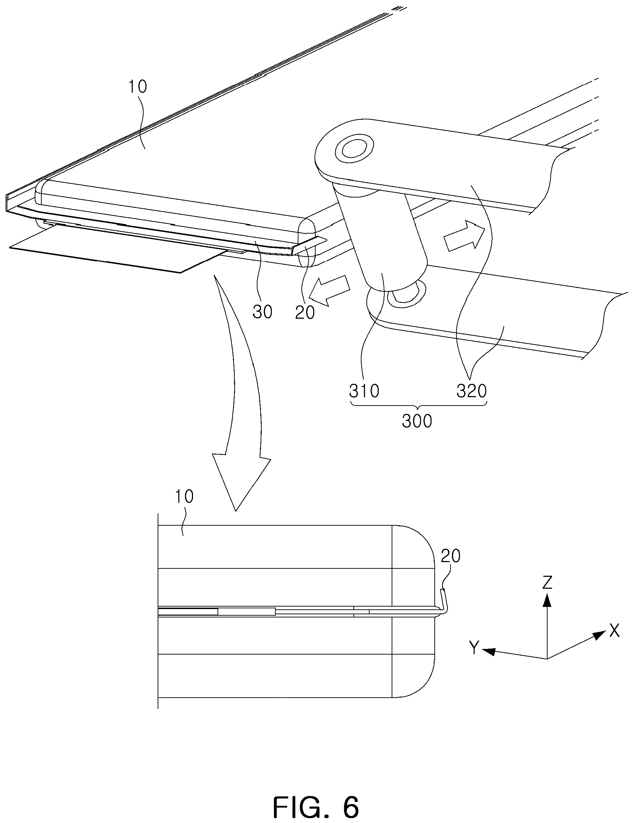

In addition, as illustrated in FIG. 6, as the roller 310 moves in the X-axis direction, the protrusion 20 is folded by the rolling of the roller 310, thereby reducing damage to the pouch film. For example, in the case in which the roller 310 is disposed perpendicular to the pouch-type rechargeable battery 10 and the protrusion 20 is pressed by rolling by the roller 310, as the entire protrusion 20 is crushed, the area in which the protrusion 20 is formed may be torn or the height of the protrusion 20 may increase. However, according to the present disclosure, by disposing the roller 310 to be inclined, the protrusion 20 may be pressed by the rolling of the roller 310, and thus, the roller may move constantly in the folding direction of the protrusion 20.

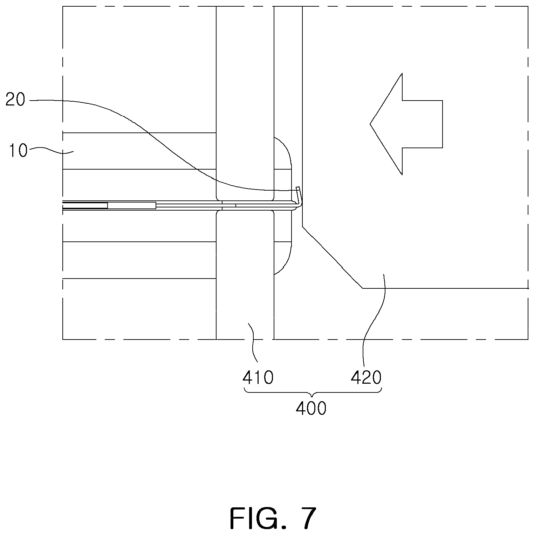

On the other hand, as illustrated in FIG. 7, the apparatus for manufacturing a pouch-type rechargeable battery may further include a pressing portion 400. As an example, the pressing portion 400 may include a fixing bar 410 for fixing a terrace portion 30 of the pouch-type rechargeable battery 10, and a pressing member 420 disposed to be spaced apart from the fixing bar 410 and pressing the protrusion 20 of the pouch-type rechargeable battery 10 by heat and pressure to maintain the protrusion 20 in a folded state.

The pressing member 420 may move toward the pouch-type rechargeable battery 10, press the protrusion 20 by heat and pressure, and then move to be away from the pouch-type rechargeable battery 10.

The preforming portion 100, the folding portion 200, the rolling portion 300, and the pressing portion 400 are sequentially disposed to be adjacent to each other, and the pouch-type rechargeable battery 10 is seated on the seating table 110 and may pass through the preforming portion 100, the folding portion 200, the rolling portion 300, and the pressing portion 400 as the seating table 110 moves.

As described above, after forming the folding groove 22 in the part where the protrusion 20 is folded through the preforming portion 100, as the protrusion 20 is folded through the folding portion 200, the rolling portion 300, and the pressing portion 400, the folded portion of the protrusion 20 may be prevented from unfolding.

In addition, since the protrusion 20 is folded by the rolling of the roller 310 of the rolling portion 300, the protrusion 20 may be removed or the height of the protrusion 20 may be reduced, and damage to the pouch film may be prevented.

As set forth above, embodiments of the present disclosure have the effect of removing protrusions formed in the pouch-type rechargeable battery or reducing the height of the protrusions.

Only specific examples of implementations of certain embodiments are described. Variations, improvements and enhancements of the disclosed embodiments and other embodiments may be made based on the disclosure of this patent document.

## Claims

1. An apparatus for manufacturing a pouch-type rechargeable battery, the apparatus comprising:
a preforming portion forming a folding groove in a portion of a protrusion of the pouch-type rechargeable battery;
a folding portion disposed on a rear end of the preforming portion and folding the protrusion along the folding groove;
a rolling portion disposed on a rear end of the folding portion and pressing the folded protrusion; and
a pressing portion disposed on a rear end of the rolling portion and fixing the folded protrusion.

2. The apparatus of claim 1, wherein the preforming portion includes,
a seating table on which the pouch-type rechargeable battery is seated;
a first mold on which a portion of the protrusion is seated and which is provided with a groove; and
a second mold coupled to the first mold and provided with a protrusion inserted into the groove.

3. The apparatus of claim 2, wherein at least one of the second mold and the first mold is lifted and lowered for coupling.

4. The apparatus of claim 1, wherein the folding portion includes,
a fixture fixing the pouch-type rechargeable battery; and
a folding mold disposed adjacent to the fixture and raised and lowered.

5. The apparatus of claim 4, wherein the folding mold is provided with an inclined surface contacting the protrusion.

6. The apparatus of claim 5, wherein the folding mold is provided with a first surface disposed on a bottom end of the inclined surface and disposed perpendicularly to a bottom surface of the folding mold.

7. The apparatus of claim 1, wherein the rolling portion includes,
a roller pressing the folded protrusion; and
a moving frame on which the roller is rotatably installed and which moves the roller in a longitudinal direction of the pouch-type rechargeable battery.

8. The apparatus of claim 7, wherein the roller is disposed to be inclined with respect to a thickness direction of the pouch-type rechargeable battery.

9. The apparatus of claim 1, wherein the pressing portion includes,
a fixing bar fixing a terrace portion of the pouch-type rechargeable battery; and
a pressing member spaced apart from the fixing bar and applying heat and pressure to the folded protrusion.

10. The apparatus of claim 9, wherein the pressing member is in contact with the folded protrusion and is moved to be spaced apart from the protrusion.

11. The apparatus of claim 8, wherein the roller has an inclination angle of 15° to 45°.
